## Europäisches Patentamt
## European Patent Office
## Office européen des brevets

(19)

(11) Numéro de publication: **0 040 566**
**B1**

(12)

# FASCICULE DE BREVET EUROPEEN

(45) Date de publication du fascicule du brevet: 27.03.85

(51) Int. Cl.⁴: **G 01 S 7/62**, G 01 S 15/89, G 10 K 11/34

(21) Numéro de dépôt: 81400771.2

(22) Date de dépôt: 15.05.81

(54) Dispositif d'échographie à focalisation dynamique et à balayage sectoriel.

(30) Priorité: 19.05.80 FR 8011109

(43) Date de publication de la demande: 25.11.81 Bulletin 81/47

(45) Mention de la délivrance du brevet: 27.03.85 Bulletin 85/13

(84) Etats contractants désignés: **DE GB IT NL**

(56) Documents cités:
EP - A - 0 000 068
FR - A - 2 347 693
FR - A - 2 373 087
FR - A - 2 413 669
FR - A - 2 419 621
US - A - 4 117 446
US - A - 4 152 678
US - A - 4 159 462
US - A - 4 169 385
US - A - 4 173 007
US - A - 4 251 779

(73) Titulaire: **COMMISSARIAT A L'ENERGIE ATOMIQUE Etablissement de Caractère Scientifique Technique et Industriel, B.P. 510, F-75752 Paris Cedex 15 (FR)**

(72) Inventeur: **Dubuis, Jean-Charles, 26, rue Fernand Léger, F-38400 Saint Martin D'Heres (FR)**
Inventeur: **Martin, Michel, La Côte Herbeys, F-38320 Eybens (FR)**
Inventeur: **Piaget, Bernard, Venon, F-38610 Gieres (FR)**
Inventeur: **Piquard, Jean-François, Montchaboud, F-38220 Vizille (FR)**
Inventeur: **Vacher, Jacques, 64, Avenue du Vercors, F-38170 Seyssinet (FR)**

(74) Mandataire: **Mongrédien, André et al, c/o BREVATOME 25, rue de Ponthieu, F-75008 Paris (FR)**

BUNDESDRUCKEREI BERLIN

# 0 040 566

## Description

La présente invention concerne un dispositif d'échographie à focalisation dynamique et à balayage sectoriel.

Un dispositif d'échographie est basé sur l'utilisation d'ondes ultrasonores qui sont des ondes de pression se propageant dans un milieu élastique. Une caractéristique bien connue des ondes sonores ou ultrasonores est de se réfléchir sur un obstacle en renvoyant un écho. A chaque séparation ou discontinuité entre deux milieux de propriétés acoustiques différentes, une partie de l'énergie est transmise et le reste est réfléchi par l'interface. C'est cette onde réfléchie, ou écho, que l'on détecte et que l'on exploite dans les sonars et dans les appareils d'échographie

Dans les techniques d'échographie médicale, le dispositif ou sonde, comprenant un transducteur pouvant émettre des ondes ultrasonores est appliqué sur la peau du patient. Les ondes émises se propagent dans les tissus et se réfléchissent sur les interfaces. Les échos provenant de ces interfaces atteignent le transducteur utilisé, alors, comme récepteur avec un retard par rapport à l'émission qui est d'autant plus grand que la surface réfléchissante est plus éloignée e la sonde.

Lorsque le temps nécessaire pour un aller et retour de l'onde ultrasonore s'est écoulé, une nouvelle impulsion est émise et ainsi de suite.

Les échos sont présentés, par exemple, sur l'écran d'un oscilloscope. Ces échos peuvent être présentés, par exemple, en mode B, c'est-à-dire dans un plan passant par la sonde. Ceci permet de déterminer la position de l'écho par rapport à la sonde. L'amplitude de l'écho, donc de l'intensité lumineuse du spot sur l'écran de l'oscilloscope, indique l'importance de la discontinuité. Une image en deux dimensions peut être obtenue grâce à une sonde que l'on déplace manuellement sur la peau et à chaque instant, les échos correspondants sont positionnés sur l'écran. Cette cadence de formation des images nécessite l'emploi d'un oscilloscope à mémoire ou des mémoires numériques sur les appareils les plus récents.

Le déplacement d'une sonde unique conduit à des temps de formation des images prohibitifs lorsqu'il s'agit d'observer des organes en mouvement. Une solution consiste à remplacer l'unique sonde par une barrette comprenant un grand nombre de transducteurs juxtaposés assurant un balayage linéaire ou sectoriel.

Dans le cas d'un balayage linéaire, les transducteurs d'une barrette sont actionnés tour à tour, chaque tir fournissant l'image d'une ligne sur l'oscilloscope.

Dans le cas d'un balayage sectoriel, chaque transducteur d'émission est relié à une ligne à retard électronique. Lors d'un tir d'émission d'ondes ultrasonores, chaque transducteur émet avec un petit retard par rapport à son voisin, par exemple, de la gauche vers la droite de la barrette. L'onde résultant de toutes les ondelettes élémentaires est une onde oblique par rapport à la barette. En modifiant les jeux de retards d'un tir à l'autre, on effectue électroniquement un balayage rapide du faisceau d'exploration, suivant un secteur angulaire défini, la sonde restant immobile.

Dans les dispositifs d'échographie, le pouvoir de résolution permettant de distinguer deux cibles situées sur la ligne de tir, c'est-à-dire la résolution longitudinale, est très bon puisqu'il est simplement relié à la durée de l'impulsion émise. En revanche, le défaut essentiel de ces techniques résulte de leur mauvaise résolution latérale liée, elle, à la largeur du faisceau d'exploration.

On remédie partiellement à ce défaut en utilisant des sondes focalisantes de grand diamètre qui permettent d'obtenir un faisceau ultrasonore suffisamment fin, mais de telles sondes sont encombrantes et doivent être manipulées dans un aquarium placé à une certaine distance du corps humain à examiner.

Pour focaliser la réception d'une onde ultrasonore avec une barrette de transducteurs, on utilise des lignes à retard électroniques, le retard étant établi suivant une loi complexe de la forme:

$$r = \frac{F}{1,5} \left( 1 - \sqrt{1 - 2\, \frac{d_i}{F} \sin\theta + \left(\frac{d_i}{F}\right)^2} \right)$$

où $r$ est le retard d'un transducteur i par rapport au centre de la barrette, $d_i$ la distance du transducteur i par rapport au centre de la barette, F la distance de focalisation et $\theta$ l'angle de tir à l'émission. L'onde arrive d'abord sur le transducteur central, puis avec un petit décalage sur les transducteurs voisins. Le signal électrique provenant du transducteur central va être le plus retardé, et ceux provenant des transducteurs voisins le seront de moins en moins, de telle sorte que tous les signaux arrivent exactement en même temps aux circuits de réception où ils sont additionnés. Cet ensemble de lignes à retard reproduit l'effet d'une lentille acoustique ordinaire.

Le balayage sectoriel du faisceau d'ultrasons, comme décrit précédemment, permet, pour un même champ exploré en profondeur, d'utiliser les barrettes plus étroites et donc faciles à positionner, ce qui est un grand avantage, notamment en cardiologie.

L'inconvénient majeur cependant, est sur le plan acoustique d'avoir une lentille de faible ouverture (largeur de 1 à 2 cm pour les barrettes existantes), ce qui donne à l'instrumentation un faible pouvoir de résolution.

Dans un article, intitulé »Les transducteurs à réseau annulaire focalisant en poursuite d'échos« paru

**0 040 566**

dans Acta Electronica du 22 février 1979 dans les pages 119 à 127, il est présenté un dispositif d'échographie qui réalise une focalisation à l'émission de l'onde ultrasonore successivement en tous les points d'une droite perpendiculaire à la surface d'émission et une focalisation électronique à la réception de l'onde ultrasonore; des moyens électroniques sont prévus pour modifier séquentiellement la position de la droite d'émission, ce qui permet le balayage d'un volume.

Ce dispositif pose le principe de cette réalisation sans donner tous les moyens permettant de réaliser un tel dispositif. De plus, ce dispositif nécessitant un émetteur-récepteur et comprenant plusieurs transducteurs disposés sous forme d'une mosaïque, relié à un dispositif de commutation électronique les associant sous forme de couronnes concentriques, est compliqué à réaliser.

Dans ce dispositif, la focalisation à la réception de l'onde ultrasonore se fait en utilisant comme lignes à retard des registres analogiques à décalage commandés par des signaux d'horlage délivrés par un oscillateur. L'utilisation d'oscillateurs, pour commander de telles lignes à retard, comme le constante d'ailleurs l'auteur de cet article, pose un certain nombre de problèmes liés en particulier à la dérive au cours du temps de ces oscillateurs.

On connaît aussi un dispositif d'échographie permettant d'effectuer une focalisation en poursuite d'échos tel que celui décrit dans le document US-A-4 169 385, mais ne permettant pas la réalisation d'un balayage sectoriel à l'émission de l'onde ultrasonore.

La présente invention concerne un dispositif d'échographie perfectionné par rapport à ceux de l'art antérieur, réalisant comme celui décrit ci-dessus une focalisation en poursuite d'échos, mais basée sur une combinaison d'un balayage sectoriel et d'une focalisation à la réception de l'onde ultrasonore. De plus, elle donne les moyens pratiques de sa réalisation.

Ce dispositif comprenant une barrette linéaire de transducteurs piézoélectriques juxtaposés, comporte une partie émettrice formée de transducteurs pouvant être excités électriquement et émettant des ondes ultrasonores et une partie réceptrice formée de transducteurs recevant des ondes ultrasonores provenant d'échos. Les transducteurs émetteurs sont excités par des signaux électriques retardés de telle sorte que l'onde ultrasonore émise présente une direction oblique par rapport à la barrette, et chaque transducteur récepteur est relié électriquement à une ligne à retard qui est en fait un registre analogique à décalage commandé par des signaux d'horloge délivrés par un oscillateur, les retards créés par ces registres étant égaux à la période d'horloge. Ce dispositif se caractérise en ce que les oscillateurs sont à fréquence commandée, chaque oscillateur étant associé à un dispositif d'asservissement en fréquence apte à égaler la fréquence délivrée par ledit oscillateur à la fréquence de consigne, et en ce qu'il comprend:

- des moyens permettant de mémoriser numériquement le signal de commande de chacun de ces oscillateurs pour mèmoriser, ainsi, l'ensemble des retards produits par les différents registres à décalage de telle façon que les signaux détectés par les transducteurs récepteurs correspondent aux ondes ultrasonores émises par un même point d'écho, lesdits moyes permettant de modifier ces retards avec chaque point d'écho et à chaque instant, lesdits retards obéissant à une consigne mémorisée dépentant de la direction de l'émission des ondes ultrasonores,
- un additionneur relié aux différentes lignes à retard, le signal de sortie de cet additionneur correspondant à l'amplitude de l'écho provenant dudit point.

L'utilisation de registres analogiques à décalage commandés par un oscillateur à fréquence réglable permet d'obtenir une focalisation en continu sur le point atteint par le centre du front de l'onde émise, du fait que les retards à la réception peuvent être modifiés à chaque instant, pour chaque émission d'ondes ultrasonores et pour chaque transducteur récepteur.

Selon un mode préféré de réalisation de l'invention, le dispositif d'asservissement comprend un compteur permettant de contrôler la fréquence de l'oscillateur associé et un comparateur permettant de comparer cette dernière à la consigne de fréquence mémorisée numériquement.

Ce système d'asservissement permet de résoudre les problèmes liés aux dérives des oscillateurs au cours du temps.

Selon un autre mode préféré de l'invention, la partie èmettrice de la barrette est disposée uniquement au centrer de celle-ci et la partie réceptrice disposée uniquement latéralement. De plus, la partie émettrice est isolée électriquement et mécaniquement de la partie réceptrice.

Ceci permet d'éliminer le retentissement du bruit d'émission, ou l'émission à haute énergie, sur la réception à très bas niveau, et d'augmenter la puissance de focalisation en éliminant la partie centrale qui reçoit de l'énergie, mais participe peu à la focalisation.

D'autres caractéristiques et avantages de l'invention ressortiront mieux de la description qui va suivre, donnée à titre purement illustratif et non limitatif, en réfénce aux figures annexées dans lesquelles:
— la figure 1 représente schématiquement un dispositif d'échographie à balayage sectoriel,
— la figure 2 représente schématiquement une barrette de transducteur selon l'invention,
— la figure 3 représente schématiquement les moyens permettant de réaliser les retards à l'émission de l'onde ultrasonore,
— la figure 4 représente schématiquement les moyens permettant de réaliser les retards à la

3

réception de l'onde ultrasonore.

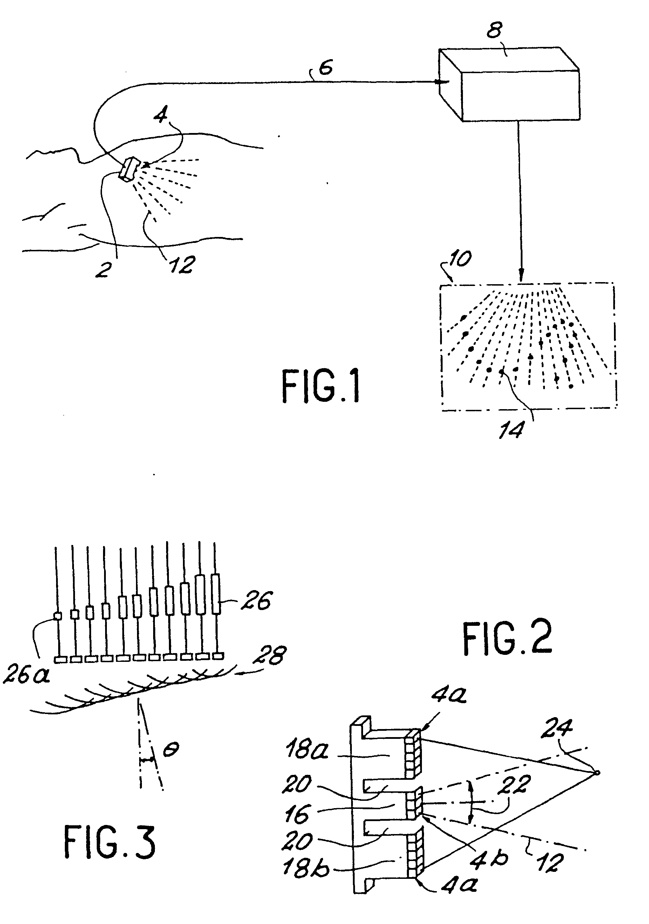

Le dispositif d'échographie, schématisé sur les figures 1 et 2 comprend une barrette linéaire 2, généralement en céramique, formée de plusieurs transducteurs piézoélectriques 4, juxtaposés. Pour obtenir une échographie d'un organe, il suffit d'appliquer cette barette 2 sur le corps du patient, au niveau de l'organe que l'on désire observer. Cette barrette 2 estreliée électriquement au moyen d'un ensemble de fils coaxiaux tel que 6 à un appareil 8, contenant les différents circuits électroniques nécessaires au fonctionnement du dispositif. Cet appareil 8 peut être relié électriquement à un oscilloscope à mémoire permettant la visualisation d'échographie telle que 10. Ce dispositif d'échographie combinant le balayage sectoriel à l'émission des ondes ultrasonores, schématisé en 12, et la focalisation en continu, c'est-à-dire la focalisation à chaque instant sur le point atteint par le faisceau d'exploration émis, permet d'obtenir des contours d'organe sous la forme de lignes en pointillés telles que 14.

La barrette 2 comprend une partie émettrice 16, étroite et disposée au centre de la barrette 2, et une partie réceptrice 18, constituée en deux parties 18a et 18b, situées de part et d'autre de la partie émettrice 16. Cette partie émettrice 16 est, de préférence, isolée électriquement et mécaniquement de la partie réceptrice 18 au moyen de coupures telles que 20. Les coupures 20 peuvent être effectuées dans la barrette 2 en céramique au moyen d'une scie à fil.

Cet isolement mécanique et électrique permet d'éliminer le retentissement du bruit d'émission (émission à haute énergie) sur la réception à très bas niveau et d'augmenter la puissance de focalisation du fait que la partie centrale, c'est-à-dire la partie émettrice 16 de la barrette 2 participe peu à cette focalisation.

Cette barrette ainsi réalisée, représente une lentille focalisante d'ouverture plus grande que l'ouverture des lentilles de l'art antérieur, du fait que cette barrette est plus large (environ 4 cm) que les barrettes (environ 2 cm) à balayage sectoriel de l'art antérieur, tout en demeurant plus courte, et possédant une fenêtre de pénétration 22 du faisceau ultrasonore (environ 1,5 cm) plus étroite que les fenêtres des barrettes de l'art antérieur (environ 2 cm). Tout ceci permet non seulement la focalisation du faisceau par exemple en un point tel que 24, mais encore un meilleur pouvoir de résolution.

Il est à noter qu'une ouverture plus grande ne permettrait pas de conserver un bon couplage acoustique entre les transducteurs et le patient, surtout si l'on effectue une échographie au niveau des côtes. En revanche, un dispositif d'échographie selon l'invention permet une étude des organes situés derrière les côtes du fait de sa petitesse et de l'utilisation d'une barrette à balayage sectoriel; ceci n'est pas possible avec le dispositif dont le principe a été exposé dans l'article de »Acta Electronica« cité plus haut.

Ce balayage sectoriel est obtenu grâce à l'association à chaque transducteur émetteur 4b, c'est-à-dire pouvant être excité par des signaux électriques et émettant des ondes ultrasonores, d'une ligne à retard électronique 26, comme schématisé sur la figure 3. Lors d'un tir d'émission (envoi d'une onde ultrasonore), le transducteur situé plus à gauche émet le premier, puis chaque transducteur de la gauche vers la droite émet avec un petit retard par rapport à son voisin. L'onde résultante 28 ainsi obtenue forme un angle $\theta$ par rapport à l'axe perpendiculaire à la barrette 2. Pat modification des retards, d'un tir à l'autre, les retards étant établis selon une loi en progression arithmétique, on obtient un balayage rapide du faisceau d'exploration.

A ce balayage sectoriel est associée une focolisation continue. Cette focalisation consiste à réaliser au niveau de chaque transducteur récepteur 4a des retards, de telle sorte que les ondes émanant d'un même point d'écho puissent être sommées en phase. Cette focalisation continue est réalisée pour chaque tir d'ondes ultrasonores en produisant des retards qui puissent être modifiés dans le temps avec la propagation de l'onde.

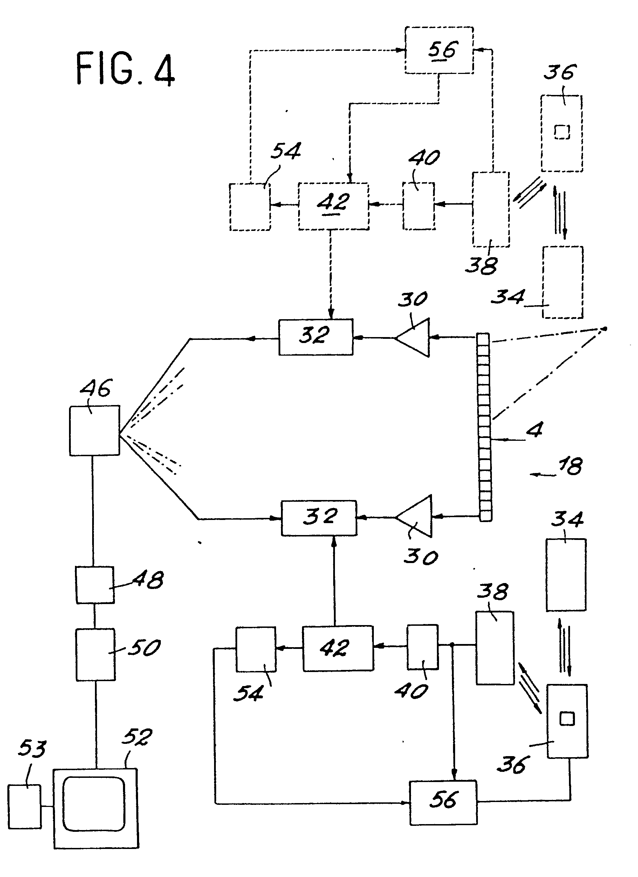

Les moyens permettant la réalisation de ces retards à la réception de l'onde sont représentés sur la figure 4. A chaque transducteur récepteur 4a est associé un amplificateur 30 et une ligne à retard 32. Ces lignes à retard 32 sont réalisées par exemple grâce à des circuits intégrés mis au point par la Société Philips et connus sous la dénomination des PCCD (peristaltic charge coupled devices), ou tous autres dispositifs à transfert de charge connus.

L'utilisation de ces lignes à retard nécessite la conversion en fréquence des retards appliqués à chaque transducteur récepteur 4a. C'est en effet en agissant sur la cadence de transfert de ces lignes à retard 32 que l'on impose le retard au transducteur récepteur correspondant.

Les lignes à retard 32 sont des registres à décalage analogiques dans lesquels on fait progresser une charge électrique de valeur correspondant à l 'amplitude du signal reçu, et ce à chaque impulsion d'horloge. Si la ligne à retard 32 comprend N cellules, le retard apporté au signal d'entrée dans cette ligne à retard sera égal à la somme des N futures périodes d'horloge. Pour cela, on fabrique un signal de fréquence réglable pilotant chaque ligne de retard 32, suivant une loi de fréquence définie au préalable, cette loi de fréquence étant mémorisée dans une mémoire numérique 34. Un calculateur 36 ou opérateur permet de lire et à cadence rapide (définissant le pas de changement de fréquence) cette mémoire 34 et ce tout au long de la propagation de l'onde ultrasonore correspondant à une émission.

La consigne de fréquence ainsi sélectionnée par le calculateur 36 est envoyée dans une autre mémoire telle que 38. La consigne de fréquence ainsi mémorisée dans la mémoire 38 est envoyée dans un convertisseur numérique analogique 40, convertissant la consigne de fréquence sous la forme d'une tension réglable avec le temps dans un oscillateur à fréquence réglable 42, fournissant les signaux d'horloge à la ligne de retard 32 correspondante, de façon à obtenir la focalisation dite en poursuite d'écho.

Le signaux émanant d'un même point d'écho sont sommés en phase au moyen d'un additionneur tel que 46.

Les signaux ainsi sommés sont filtrés au moyen d'un filtre 48 à taux de rejection élevé, servant à éliminer les bruits de fréquence d'horloge, puis redressés et soumis à une détection de crête par un dispositif 50 de façon à obtenir une échographie satisfaisante que l'on peut visualiser sur l'écran d'un oscilloscope tel que 52 associé à un dispositif de balayage angulaire 53 permettant la reproduction du balayage angulaire du faisceau ultrasonore.

De façon à obtenir un point de focalisation de petite dimension, il est nécessaire d'associer à chaque oscillateur 42 un dispositif d'asservissement ou d'autoalignement de façon à limiter les dérives desdits oscillateurs, ces dérives pouvant entraîner un écart important entre les retards effectifs, c'est-à-dire retard donné en consigne aux lignes de retard 32 correspondantes, et les retards théoriquement acquis, ces retards étant établis au préalable et suivant la loi de fréquence mémorisée dans la mémoire numérique 34.

Ce dispositif d'asservissement comprend un compteur 54 contrôlant la fréquence de l'oscillateur 42 associé en comptant le nombre de coups d'horloge pendant un temps donné. La fréquence fournie par l'oscillateur est comparée au moyen d'un comparateur tel que 56 à la consigne de fréquence mémorisée dans la mémoire 38. Si une différence apparaît entre le retard que fournit l'oscillateur et la consigne de retard, le comparateur envoie un signal au calculateur 36, qui redonne à l'oscillateur 42, par l'intermédiaire de la mémoire 38 et du convertisseur 40, une consigne de fréquence modifiée que l'on applique à la ligne à retard 32 correspondante. La modification de la consigne permet le rattrapage du retard à appliquer aux transducteurs correspondants.

Pour modifier la fréquence de l'oscillateur 42, le comparateur 56 peut, au lieu d'envoyer un signal au calculateur 36, envoyer directement audit oscillateur 42 un signal d'erreur égal à la différence des signaux issus de l'oscillateur et dela mémoire 38, permettant la modification de la fréquence de l'oscillateur.

Les deux variantes pour modifier la fréquence sont schématisées sur la figure 4.

Tout le circuit électronique associé à chaque ligne à retard 32 associée, elle, à un transducteur récepteur 4a, permet une bonne poursuite d'écho, c'est-à-dire une bonne focalisation en continu sur le point atteint par le front d'onde émis.

En ce qui concerne les retards à l'émission, nous n'avons envisagé jusqu'à présent, que des retards suivant une loi ne permettant pas d'obtenir une focalisation à l'émission. Bien entendu, une focalisation à l'émisson peut être obtenue de la même façon que la focalisation à la réception, par utilisation de retards obéissant à une loi de variation adéquate. Dans ce cas, la focalisation ne peut être faite que pour un point de l'axe de tir et ce à chaque tir.

**Revendications**

1. Dispositif d'échographie comprenant une barrette linéaire (2) de transducteurs piézoélectriques (4) juxtaposés, comportant une partie émettrice (16) formée de transducteurs (4b) émettant des ondes ultrasonores, ces transducteurs émetteurs (4b) étant excités par des signaux électriques retardés de telle sorte que l'onde ultrasonore émise présente une direction oblique par rapport à la barrette (2), et une partie réceptrice (18) formée de transducteurs (4a) recevant des ondes ultrasonores provenant d'échos, chaque transducteur récepteur (4a) étant relié électriquement à un registre analogique à décalage (32) commandé par des signaux d'horloge délivrés par un oscillateur (42), ces registres étant aptes à créer un retard égal à la période d'horloge, caractérisé en ce que les oscillateurs (42) sont à fréquence commandée, chaque oscillateur (42) étant associé à un dispositif d'asservissement en fréquence apte à égaler la fréquence délivrée par ledit oscillateur à la fréquence de consigne pour imposer le retard au transducteur. Recepteur correspondant, et en ce qu'il comprend:

— des moyens (34) permettant de mémoriser numériquement le signal de commande de chacun de ces oscillateurs pous mémoriser, ainsi, l'ensemble des retards produits par les différents registres à décalage de telle façon que les signaux détectés par les transducteurs (4a) correspondent aux ondes ultrasonores émises par un même point d'écho (24), lesdits moyens permettant de modifier ces retards avec chaque point d'écho et à chaque instant, lesdits retards obéissant à une consigne mémorisée dépendant de la direction de l'émission des ondes ultrasonores,
— un additionneur (46) relié aux différentes lignes à retard (34), le signal de sortie de cet additionneur correspondant à l'amplitude de l'écho provenant dudit point.

2. Dispositif d'échographie selon la revendication 1, caractérisé en ce que la partie émettrice (16) de la barrette (2) est disposée uniquement au centre de celle-ci et la partie réceptrice (18) disposée uniquement latéralement.

3. Dispositif d'échographie selon l'une quelconque des revendications 1 et 2, caractérisé en ce que la partie émettrice (16) est isolée électriquement et mécaniquement de la partie réceptrice (18).

4. Dispositif d'échographie selon l'une quelconque des revendications 1 à 3, caractérisé en ce que le dispositif d'asservissement comprend un compteur (54) permettant de contrôler la fréquence de l'oscillateur associé et un comparateur (56) permettant de comparer cette dernière à la consigne de fréquence mémorisée numériquement.

5. Dispositif d'échographie selon l'une quelconque des revendications 1 à 4, caractérisé en ce que la mémoire numérique (34) est lue à une cadence rapide et en continu pour une émission d'ondes ultrasonores au moyen d'un opérateur (36).

6. Dispositif d'échographie selon la revendication 1, caractérisé en ce que l'additionneur (46) est suivi d'un filtre (48) puis d'un circuit redresseur et détecteur de crête (50).

**Patentansprüche**

1. Echographisches Gerät mit einer geradlinigen Leiste (2) von sich nebeneinander befindenden, piezoelektrischen Wandlern (4), die einen Senderabschnitt (16), der von Ultraschallwellen ausstrahlenden Wandlern (4b) gebildet ist, wobei diese Senderwandler (4b) durch elektrische Signale erregt sind, die derart verzögert sind, daß die ausgesandte Ultraschallwelle eine in Bezug auf die Leiste (2) schräge Richtung aufweist, und einen Empfängerabschnitt (18) umfaßt, der von Wandlern (4a) gebildet ist, die die von Echos herkommende Ultraschallwellen empfangen, wobei jeder Empfängerwandler (4a) elektrisch mit einem analogen Schieberegister (32) verbunden ist, welches durch von einem Oszillator (42) gelieferten Taktsignalen steuerbar ist, und wobei diese Register eine Verzögerung gleich der Taktperiode erzeugen können, dadurch gekennzeichnet, daß die Oszillatoren (42) frequenzgesteuert sind, wobei jeder Oszillator (42) mit einer Frequenzsteuerungseinrichtung verbunden ist, durch die die von dem Oszillator abgegebene Frequenz auf die Einstellfrequenz abgleichbar ist, um die Verzögerung dem entsprechenden Empfängerwandler zu verleihen, und daß die Vorrichtung umfaßt:

— Mittel (34), mit denen numerisch das Steuersignal von jedem der Oszillatoren speicherbar ist, um somit die Gesamtheit der von den unterschiedlichen Schieberegistern erzeugten Verzögerungen derart zu speichern, daß die von den Empfängerwandlern (4a) erfaßten Signale den von demselben Echopunkt (24) ausgesandten Ultraschallwellen entsprechen, wobei die Mittel ermöglichen, diese Verzögerungen bei jedem Echopunkt und zu jedem Moment zu verändern und die Verzögerungen einem gespeicherten Einstellwert folgen, der von der Aussenderichtung der Ultraschallwellen abhängt,

— eine mit den verschiedenen Verzögerungsleitungen (32) verbundene Summiereinrichtung (46), wobei das Ausgangssignal dieser Summiereinrichtung der Amplitude des von diesem Punkt kommenden Echos entspricht.

2. Echographisches Gerät nach Anspruch 1, dadurch gekennzeichnet, daß der Senderabschnitt (16) der Leiste (2) ausschließlich in ihrer Mitte angeordnet ist und daß der Empfängerabschnitt (18) ausschließlich seitlich angeordnet ist.

3. Echographisches Gerät nach Anspruch 1 oder 2, dadurch gekennzeichnet, daß der Senderabschnitt (16) elektrisch und mechanisch von dem Empfängerabschnitt (18) isoliert ist.

4. Echographisches Gerät nach einem der Ansprüche 1 bis 3, dadurch gekennzeichnet, daß die Frequenzsteuerungseinrichtung einen Zähler (54), mit dem die Frequenz des verbundenen Oszillators steuerbar ist, und einen Vergleicher (56) umfaßt, mit dem diese Frequenz mit numerisch gespeicherten Einstellfrequenz vergleichbar ist.

5. Echographisches Gerät nach einem der Ansprüche 1 bis 4, dadurch gekennzeichnet, daß der numerische Speicher (34) in schneller zeitlicher Folge und kontinuierlich zum Aussenden von Ultraschallwellen mittels eines Operators (36) gelesen wird.

6. Echographisches Gerät nach Anspruch 1, dadurch gekennzeichnet, daß der Summiereinrichtung (46) ein Filter (48) und diesem ein Gleichrichterschaltkreis und diesem eine Spitzenwerterfassungseinrichtung (50) nachgeschaltet ist.

**Claims**

1. Ultrasonic imaging device comprising a linear bar (2) of aligned piezoelectric transducers (4), comprising an emitting part (16) formed of transducers (4b) emitting ultrasonic waves, said emitting transducers (4b) being activated by delayed electric signals whereby the ultrasonic wave is emitted obliquely with respect to the bar (2), and a receiving part (18) formed by transducers (4a) for receiving echoed ultrasonic waves, each receiving transducer (4a) being electrically connected to an analogue shift register (32) commanded by clock signals delivered by an oscillator (42), said registers being adapted to provide a delay equal to the clock period, characterized in that the oscillators (42) have a predetermined frequency, each oscillator (42) being associated with a frequency-control means, adapted to make the frequency delivered by said oscillator equal to a command frequency to impose the delay on the corresponding receiving transducer, and in that it comprises:

— means (34) permitting digital memorization of the command signal of each of the oscillators to be memorized, and thereby the total delays produced by the different shift registers, whereby the signals detected by the receiving transducers (4a) corresponding to ultrasonic waves emitted by a same echo point (24), said means enabling modification of the delays for each echo point and at each instant, said delays being controlled by a memorized command depending on the direction of emission of the ultrasonic waves,
— a counter (46) connected to the different delay lines (32), the output signal of said counter corrresponding to the amplitude of the echo provided at said point.

2. Ultrasonic imaging device according to Claim 1, characterized in that the emitting part (16) of the bar (2) is located only at the centre there of, and the receiving part (18) is located only laterally.

3. Ultrasonic imaging device according to either of Claims 1 and 2, characterized in that the emitting part (16) is electrically and mechanically insulated from the receiving part (18).

4. Ultrasonic imaging device according to any one of Claims 1 to 3, characterized in that the control device comprises a counter (54) enabling control of the frequency of the associated oscillator, and a comparator (56) enabling comparison of said latter to the digitally-memorized command frequency.

5. Ultrasonic imaging device according to any one of Claims 1 to 4, characterized in that the digital memory (34) is rapidly and continuously readble by an operator (36) for any emission of ultrasonic waves.

6. Ultrasonic imaging device according to Claim 1, characterized in that the counter (46) is followed by a filter (48) and then a peak-detection and correction circuit (50).

FIG.1

FIG.2

FIG.3

# FIG. 4